# EUROPÄISCHE PATENTANMELDUNG

(11) **EP 0 995 954 A1**
(43) Veröffentlichungstag der Anmeldung: **26.04.2000**
(21) Anmeldenummer: 98119910.2
(22) Anmeldetag: 21.10.1998
(51) Int. Cl.: F24D 3/16

(54) **Systemplatte**

(71) Anmelder: Polygo Holding GmbH, 94559 Niederwinkling (DE)
(72) Erfinder: Steiner, Josef, 3370 Ybbs/Donau (AT)

(57) **Zusammenfassung**

Die Erfindung betrifft eine vorgefertigte Systemplatte (1), wie sie besonders im Fertigbau beispielsweise für Wandheizungen Verwendung findet, wobei die fluid- oder stromführenden führenden Leitungen (2), sogen. Register, in eingearbeiteten Kanälen derselben verlegt und mit außerhalb der Systemplatte verlegten Vor- und Rücklaufleitungen etc. verbunden sind, wobei die Anschlußenden (29) der Leitungen für Transportzwecke in dafür im Randbereich der Systemplatte (1) vorgesehene Schlitze (16) eingelegt sind und in der Systemplatte Abzweigungen für die Verbindung mit dem Register der nächsten Systemplatte oder Vor- und Rücklaufleitungen oder dergl. eingearbeitet sind.

## Beschreibung

Vorgefertigte Systemplatte (1) aus beispielsweise mineralischem Werkstoff, Kunststoff oder dergl. mit in darin eingearbeiteten Kanälen (1a) verlegten fluid- oder stromführenden Leitungen (2), z.B. sogen. Heiz- oder Kühlregister. Diese Systemplatten sind auch als Bauplatten, Klimaplatten usw. bekannt.

Vorgefertigte Systemplatten setzen sich in der Technik des Hausbaus, insbesondere dem Fertighausbau aus Gründen der Rationalisierung immer mehr durch. Solche Systemplatten, besonders sogen. Klimaplatten, dienen u.a. dazu in darin eingebrachten Kanälen, fluidführende Leitungen, sogen. Rohrregister, wie z.B. Sanitär-, Heiz-, Kühl-, Stromleitungen aufzunehmen, die auf der Baustelle mit den Zu- und Ableitungen verbunden werden. So sind z.B. Wand-, Decken- und Fußbodenheizungen oder komplette Klimaeinrichtungen mit flüssigkeitsführenden Rohren oder stromführenden Leitern auf einfache Weise zu installieren. Gleiches gilt für die Installation von sanitären Einrichtungen.

Systemplatten, insbesondere auch Klimaplatten, sind an sich bekannt. Beispielsweise offenbart die GB 2 035 435 A und die AT 381 160 B Klimaplatten, die aus Trägerplatten bestehen, welche mit Noppen zur Festlegung der darauf verlegten Rohrregister versehen sind. Zwischen der äußeren Abdeckung und den Rohren des Rohrregisters ist überwiegend mit Luft ausgefüllt. Dagegen zeigt die EP 3 266 278 C1 eine Systemplatte oder Systemplatte für vorzugsweise Fußbodenheizungen, die auf der Baustelle verlegt werden, bei der der Zwischenraum mit Estrich ausgefüllt ist. Auch der Einsatz hydraulischer Mörtel ist in diesem Zusammenhang, u.a. mit der AT 403 396 B vorgeschlagen worden.

Allen diesen Systemplatten ist gemeinsam, daß die Anschlüsse, d.h. die Rohr- bzw. Leitungsenden, die zur Verbindung mit Vor- und Rücklaufleitungen etc. dienen, über den Rand der Systemplatte herausragen, falls sie nicht abgelängt sind. Die überhängenden Rohr- und sonstigen Leitungsenden sind aber insofern kritisch, da sie sehr leicht auf dem Transport, während der Lagerung und der Montage beschädigt, bzw. aus den Leitungskanälen herausgerissen werden können. Da diese Leitungen, mit denen die Rohrenden zu verbinden sind außerhalb der Systemplatte verlaufen, entstehen dann erhebliche Probleme bei der Wiederherstellung des ursprünglichen Zustandes und der Herstellung der Verbindungen, die insbesondere einen erheblichen Zeit- und Montageaufwand bedingen. Werden andererseits die Rohrenden, el. Leitungsenden usw. abgelängt, dann ist der Aufwand zur Herstellung der Verbindungen noch erheblich größer. Ein weiteres Problem stellen direkte Verbindungen einzelner Systemplatten untereinander dar, beispielsweise bei großflächigen Wand- oder Deckenheizungen.

Die Erfindung, wie sie in den Ansprüchen beschrieben ist, löst die Aufgabe, diese Nachteile bisher bekannter Systemplatten zu vermeiden und eine solche vorgefertigte Systemplatte zu besitzen, bei der darauf bzw. darin verlegten Register und deren Enden weder auf dem Transport, noch bei der Lagerung und Montage Beschädigungen ausgesetzt sind und deren Verbindung mit Vor- und Rücklaufleitungen bzw. benachbarten Systemplatten auf einfache Weise vorgenommen werden kann.

Die mit der Erfindung erzielten Vorteile liegen insbesondere in dem Schutz der Rohr- bzw. Leitungsenden vor Beschädigung während des Transports, der Lagerung durch das einfach vorzunehmende und sichere Einlegen der Leitungs- bzw. Rohrenden in einem bereits bei der Herstellung der Systemplatte darin vorgesehenen Schlitz und den ebenfalls bei der Herstellung darin eingearbeiteten Anschluß- bzw. Abzweigungskanälen für die Verbindung mit benachbarten Systemplatten.

Die Erfindung ist nachstehend anhand eines in den Abbildungen dargestellten Ausführungsbeispieles näher erläutert.

Es zeigt:

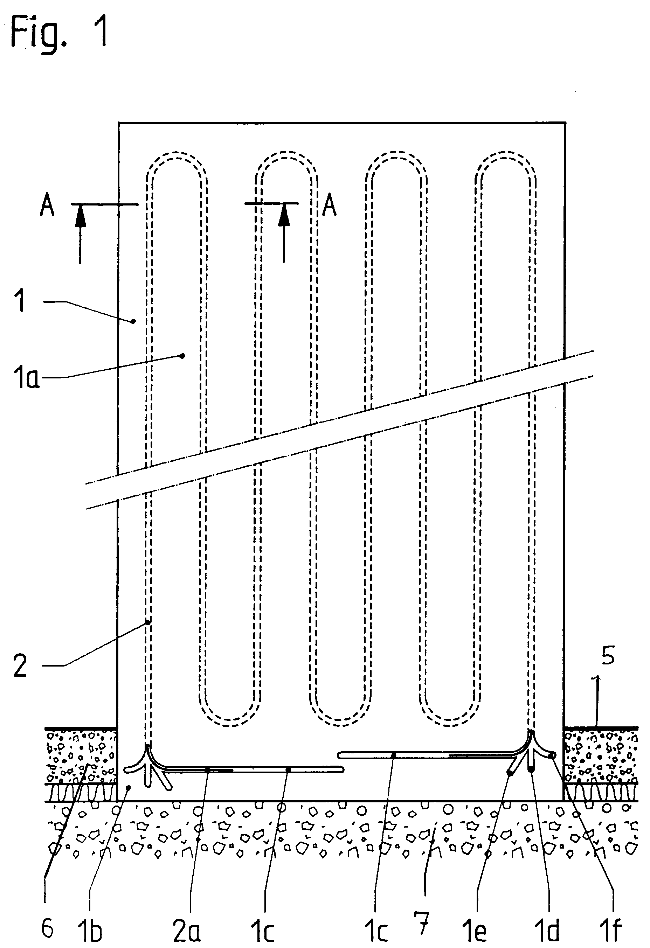

Fig. 1 eine Draufsicht auf eine erfindungsgemäße Systemplatte und
Fig. 2 einen Schnitt durch Fig. In Richtung A - A.

Die Abbildungen zeigen eine vorgefertigte Systemplatte 1 beispielsweise aus mineralischem Werkstoff, Kunststoff oder dergl. mit darin eingearbeiteten Kanälen 1a für die Aufnahme von fluid- oder stromführenden Leitungen 2 oder dergl. Diese Systemplatten werden beispielsweise für den Einsatz in Wand- oder Deckenheizungen bzw. -kühlungen und Kimaeinrichtungen, Fußbodenheizungen oder für Sanitärleitungen zu Waschbecken, Duschen usw. hergestellt.

Die Systemplatte 1 ist, wie in der Zeichnung dargestellt, im unteren Randbereich 1b, dem sogen. Anschlußbereich 1b mit je einem Schlitz 1c, 1c' für die Aufnahme des Endbereiches 2a der Leitung 2 während des Transportes und der Lagerung versehen. Diese Schlitze 1c, 1c' stehen mit dem Kanal 1a in Verbindung. Der Kanal 1a geht außerdem an seinen beiden Enden in je einen Anschlußbereich 1b mit vorzugsweise in die Systemplatte eingefrästen Abzweigungen 1d, 1e, 1f, bzw. 1d', 1e', 1f' über. Diese Abzweigungen erleichtern einerseits die Montagearbeiten und verhindern andererseits das Hervorstehen der Leitungen über die Oberfläche der Systemplatte 1 in diesem Bereich. Die Abzweigung 1f fluchtet mit der entsprechenden Abzweigung 1f der benachbarten Systemplatte, so daß die Leitung 2 über mehrere Systemplatten 1, 1', 1'' usw. verlegt werden kann. Die Abzweigungen 1d und 1e, bzw. 1d' und 1e' dienen der Aufnahme der Leitungsenden 2a bei der Herstellung der Verbindung mit der in der Abbildung nicht dargestellten Vor- bzw. Rücklaufleitung oder dergl.

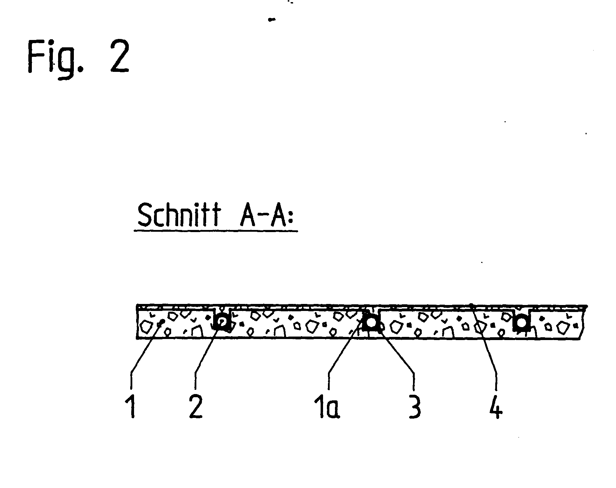

Die Rohre oder dergl. 2 sind, wie in der Fig. 2 dargestellt, in einer gut wärmeleitenden Masse 3 eingebettet. Die Systemplatte ist mit einer Abdeckung 4 oder dünnen Putzschicht zum Raum hin verschlossen. Bei der Verwendung der Systemplatte 1 beispielsweise als Wand-Klimaplatte wird sie auf der Beton oder Holzdecke 7 aufgestellt über der noch üblicherweise einer Isolierschicht 6 vorgesehen ist. Der Anschlußbereich 1b der Systemplatte 1 ist nach Fertigstellung der Anschlüsse zu den Vor- und Rücklaufleitungen bis zu Oberkante des Fußbodens 5.

Anstelle im Randbereich der Systemplatte 1 können Schlitze 1c und die Anschlüsse und Abzweigungen 1d, 1e, 1f selbstverständlich auch in anderen geeigneten und den jeweiligen Gegebenheiten entsprechenden Bereichen der Systemplatte 1 vorgesehen sein.

## Patentansprüche

1. Vorgefertigte Systemplatte (1) aus beispielsweise mineralischem Werkstoff, Kunststoff oder dergl. mit in darin eingearbeiteten Kanälen (1a) verlegten fluid- oder stromführenden Leitungen (2), z.B. sogen. Heiz- oder Kühlregistern, **dadurch gekennzeichnet,** daß in mindestens einem Anschlußbereich (1b) der Systemplatte (1) mindestens ein Schlitz (1c) für das Anschlußende (2a) der in dem Kanal (1a) verlegten Leitung (2) vorgesehen ist, wobei der Endbereich (1a') des Kanals (1a) in diesem Schlitz (1c) mündet.

2. Systemplatte nach Anspruch 1, **dadurch gekennzeichnet,** daß mindestens ein Endbereich (1a') des Kanals (1a) in mindestens einer Abzweigung (1d, 1e, 1f,) mündet.

3. Systemplatte nach Anspruch 1 und 2, **dadurch gekennzeichnet,** daß Schlitze (1c) und (1c') in unterschiedlichen Ebenen in der Systemplatte (1) vorgesehen sind.

4. Klimalatte nach Anspruch 1 und einen der folgenden, **dadurch gekennzeichnet,** daß die Abzweigungen (1g) mit den entsprechenden Abzweigungen der anschließenden Systemplatten (1', 1'') fluchten.

5. Systemplatte nach Anspruch 1 und einen der folgenden, **dadurch gekennzeichnet,** daß eine Leitung (2) durch die Kanäle (1a) mehrere Systemplatten (1,1',1'') durch die Abzweigungen (1g, 1g') verlegt sind und in den Schlitzen (1c, 1c') der jeweils endständigen Systemplatten (1) münden.

6. Systemplatte nach Anspruch 1 und einen der folgenden, **dadurch gekennzeichnet,** daß die Leitung (2) in dem Kanal (1a) der Systemplatte (1) in einem gut wärmeleitenden Werkstoff (3) eingebettet ist.

7. Systemplatte nach Anspruch 1 und einen der folgenden, **dadurch gekennzeichnet,** daß die Schlitz (1c) in einem Randbereich der Systemplatte (1) vorgesehen ist.
